Europäisches Patentamt

European Patent Office

Office européen des brevets

(19)

(11) Publication number: **0 060 037**

**A1**

(12) **EUROPEAN PATENT APPLICATION**

(21) Application number: **82300774.5**

(22) Date of filing: **16.02.82**

(51) Int. Cl.³: **B 32 B 27/32**

(30) Priority: **25.02.81 GB 8106003**

(43) Date of publication of application:
**15.09.82 Bulletin 82/37**

(84) Designated Contracting States:
**BE DE FR GB IT NL SE**

(71) Applicant: **BRITISH CELLOPHANE LIMITED**
**Bath Road**
**Bridgwater Somerset TA6 4PA(GB)**

(72) Inventor: **Andrews, William John**
**Langaller House Bathpool**
**Taunton Somerset(GB)**

(74) Representative: **Hardisty, David Robert et al,**
**BOULT, WADE & TENNANT 27 Furnival street**
**London EC4A IPQ(GB)**

(54) **Heat-sealable polypropylene films, methods for their manufacture and packages including such films.**

(57) An oriented heat-sealable polypropylene film comprises a base polypropylene film having on at least one surface at least two layers, the first outer heat sealable layer being a blend of polybutene-1 with polypropylene; the polybutene-1 content lying in the range between 30 and 95% by weight and most preferably in the range between 70 and 80% by weight, and the second layer, lying immediately below the first layer, being a polymer having a preponderance of ethylene and/or butene-1 units, such as low or high density polyethylene or an ethylene/butene copolymer in which ethylene units predominate or polybutene-1 or a butene-1/ ethylene copolymer in which butene-1 units predominate. The second layer modifies the sealing properties of the first layer to provide a heat-sealable layer having improved hot tack properties and, in some cases, an improved heat-sealing threshold temperature.

EP 0 060 037 A1

Croydon Printing Company Ltd.

0060037

HEAT-SEALABLE POLYPROPYLENE FILMS,
METHODS FOR THEIR MANUFACTURE AND
PACKAGES INCLUDING SUCH FILMS

This invention relates to heat-sealable
polypropylene films.

Polypropylene film is well known for use as a
packaging material. It has high clarity, excellent
barrier properties in respect of water vapour and
excellent strength particularly when its molecular
structure has been oriented by stretching in one or
preferably two directions at right angles to each
other while subjected to a temperature in the range
between $2^{o}C$ below the crystalline melting point of
the polypropylene and its second order transition
temperature.

Although polypropylene film is inherently
heat-sealable to itself and is capable of forming
heat-seals of adequate strength at temperatures of

BAD ORIGINAL

about 150°C, at such temperatures and down to about 140°C, oriented polypropylene film will shrink and produce undesirable buckling in the region of the heat-seal.

It is known to overcome this distortion problem by forming on one or both surfaces of the oriented polypropylene film a layer of a heat-sealable polymer or copolymer capable of forming heat-seals of adequate strength at temperatures below the temperature at which heat distortion occurs to any significant extent in the base oriented polypropylene film.

Examples of such heat-sealable polymers are polyethylene, copolymers of ethylene with propylene or butene-1, copolymers of propylene with butene-1, and Surlyn (trade mark) ionomers.

It is most desirable that the heat-sealable polymer or copolymers of the heat-sealing layer will provide seals of adequate strength (that is about 300 grams/38 millimetres of seal width - flat jaw sealing) when heat-sealed at temperatures which are as low as possible without being tacky at ambient temperatures, for example, heat-sealing temperatures below about 120°C. There is then a wide temperature range between the minimum heat-

BAD ORIGINAL

sealing temperature to give seals of adequate strength (the "threshold seal temperature") and the temperature at which distortion of the oriented polypropylene film takes place. This allows room for temperature drift of heat-sealing tools, such as jaws, on high speed packaging machines and for a temperature gradient through the outside layer of the film to the innermost heat-sealing layers, without heat distortion of the base polypropylene film taking place.

It is also most desirable that the heat-sealable polymer or copolymer when heat-sealed has immediate strength or tack while hot ("hot tack properties") sufficient to avoid the sealed portions springing apart on retraction of the heat-sealing tools and that it has such good hot tack properties over a wide range of temperatures about the threshold seal temperature.

We are aware that certain polybutene-1/ polypropylene blends when used as a heat-sealable layer on oriented polypropylene film have useful threshold seal temperatures but only a limited temperature range over which useful hot tack properties are displayed. However, we have now found that by providing a layer of a polymer having a preponderance of ethylene and/or butene-1 units immediately below

BAD ORIGINAL

the heat-sealable layer of the polybutene-1/ polypropylene blend, the hot tack properties of the blend are considerably improved together with, in many cases, an improvement in the threshold seal temperature of the blend.

Thus, in accordance with the present invention an oriented heat-sealable polypropylene film comprises a base polypropylene film having on at least one surface at least two layers of which the outer layer comprises a blend of polybutene-1 with polypropylene in which the polybutene-1 content is from 30 to 95% by weight of the blend and the layer lying immediately below the outer layer comprises a polymer having a preponderance by weight of ethylene and/or butene-1 units.

By "polypropylene film" we mean a film of a homopolymer of propylene or a copolymer of propylene and another monomer such as ethylene in which the propylene content is at least 85% by weight or a blend of polypropylene with a minor proportion by weight of a compatible polyolefin.

By "polybutene-1" we mean the homopolymer of butene-1 or a copolymer of butene-1 with a small proportion of a copolymerisible monomer, for example, ethylene. A small proportion in this context will include for instance 2% by weight.

BAD ORIGINAL

The blend of polybutene-1 and polypropylene preferably has a polybutene-1 content lying in the range between 50 and 85% by weight, or more preferably in the range between 70 and 80% by weight.

Examples of suitable polymers having a preponderance of ethylene units are low density and high density polyethylenes, ethylene/butene-1 copolymers having greater than 50% by weight of ethylene units, and low density polyethylene resins having carboxylic acids grafted thereto such as are marketed under the trade mark "ADMER". These polymers and copolymers are known per se to be useful as heat-sealable coating compositions for base polypropylene films but have no, or at least limited, hot tack properties.

Examples of suitable polymers having a preponderance of butene-1 units are polybutene-1, and butene-1 copolymers for example butene-1/ethylene copolymers having greater than 50% by weight of butene-1 units.

These polymers and copolymers, too, are known to be useful as heat-sealable coating compositions for base polypropylene films and some have good hot tack properties. These promote even better hot tack

BAD ORIGINAL

properties in the blend of polybutene-1 with polypropylene but tend to give rise to heat-sealable polypropylene film having a greater haze than film employing the polymer and copolymers having a preponderance of ethylene units as the layer lying immediately below the outer blend layer.

The first and second layers may be applied to the base polypropylene film by any of the known methods including co-extrusion of melts of the materials, melt extrusion, lamination of preformed films and by stretching preformed films in contact with each other to form a unitary film. The base polypropylene film may be oriented by stretching in one direction or preferably in two directions substantially at right angles to each other either before or after application of the layers.

The invention also includes a method of manufacturing an oriented heat-sealable polypropylene film having on at least one surface at least two layers as described herein.

The invention will now be illustrated by the following Examples.

Example 1

Table 1 shows the results of eight experimental runs.

BAD ORIGINAL

In all the runs a heat-sealable oriented polypropylene film was formed by co-extruding a melt of polypropylene with a melt of a blend of polybutene-1 and polypropylene in which the polybutene-1 was present in an amount of 75% by weight of the blend.  In the control run 1 a two-layered film was produced.

In runs 2 to 8 a third melt of a polymeric material was, in addition, co-extruded between the polypropylene melt and the blend melt to produce a three layered film.

All the co-extruded films were, in each run, quenched on a chill roller then heated to a temperature of about $100^{\circ}C$ before being stretched 5:1 times in the machine direction between two sets of nip rollers in which the rollers at the output end were rotated at a greater peripheral speed than the rollers at the input end.  Each film was then led into a stenter maintained at a temperature of about $150^{\circ}C$ and stretched transversely to 9 times its original width.  The film was heat-set, cooled, trimmed at the edges and wound into a roll.

In run 1 the resulting two layered film was about 25 microns thick of which the blend layer was 1 micron thick.

In runs 2 to 8 the resulting three-layered film

BAD ORIGINAL

was about 25 microns thick of which the blend layer and the intermediate polymeric material layer were each 1 micron thick.

The threshold sealing temperature and the hot tack temperature range of each of the samples were determined as follows :-

Threshold Sealing Temperature. Samples of film 38 mm wide were taken and two pieces were pressed together, blend layer to blend layer, between plain flat rectangular heat-sealing jaws measuring 20 x 50 mms. heated to $90^{o}C$ at a pressure of 1 $kg/cm^{2}$ for a dwell time of 0.8 seconds. The procedure was repeated with fresh samples except that at each repeat the temperature of the jaws was raised by $5^{o}C$. The strength of the seal of each of the samples was then measured by determining the force in grams required to peel each element of the sealed samples apart. From these results was determined the lowest sealing temperature at which a sealing strength of 300 grams/ 38 mm was obtained. This is expressed in the Table as the Threshold Sealing Temperature.

Hot Tack Temperature Range. For this measurement a resilient metal blade was used which when bent over upon itself so that the ends touched applied an opening force of 45 grams. A strip of a sample

BAD ORIGINAL

film 50 mms wide and of length greater than the blade was laid blend layer downwards along the upper surface of the blade (when in a flat state) with the ends protruding beyond the ends of the blade. The blade with sample was then curved over together with the sample on the outside until the ends of the blade and the protruding ends of the sample touched.

While the blade was held under tension the protruding ends of the sample were sealed between serrated heat-seal jaws (10 x 200 mms) at a pressure of 35 kg/cm$^2$ for a dwell time of 1 second at $70^{o}$C. Just before the jaws opened the blade was released so as to apply a peeling force of 45 grams upon the seal. The seal was said to have acceptable hot tack properties if the seal was peeled open to a depth of not exceeding 3 mms. The test was repeated with a fresh sample and with an increase of temperature of the sealing jaws by $5^{o}$C. By further repeats it was possible to determine the range of temperature over which a satisfactory hot tack performance was obtained.

The runs 2 to 8 were repeated but with the blend layer omitted so that the intermediate layers of the runs became the heat-seal layers. The threshold sealing temperatures and the hot tack temperature ranges were determined as before and entered into the Table.

BAD ORIGINAL

From the results of runs 2 to 6 it is seen that layers of polymers having a preponderance of ethylene units beneath the layer of the polybutene-1/polypropylene blend had a significant effect in improving the hot tack properties of the blend and, in runs 2 to 5, also improved the threshold sealing temperatures of the blend.

Run 7 shows that a polymer having a preponderance of butene-1 units beneath the layer of the polybutene-1/ polypropylene blend significantly improved the hot-tack properties of the blend and showed some improvement in the threshold sealing temperature. However the co-extruded film was found to be slightly hazy compared with the resultant films of Runs 2 to 6.

Run 8 shows that a propylene based polymer layer below the layer of the blend has no effect upon the normal hot tack or threshold sealing temperature of the blend.

TABLE 1

| Run | Intermediate Layer (Monomer parts by weight) | Threshold Sealing Temperature °C | | Hot tack °C | | | |
|---|---|---|---|---|---|---|---|
| | | | | Range | | Span | |
| | | Layer Material | Film | Layer Material | Film | Layer Material | Film |
| 1 | NONE | – | 112 | – | 110-125 | – | 15 |
| 2 | 88:12 Ethylene/ Butene-1 Copolymer | 85 | 90 | Nil | 70-105 | 0 | 35 |
| 3 | ADMER L1000 resin Carboxylic graft on low density polyethylene | 100 | 98 | Nil | 80-125 | 0 | 45 |
| 4 | Low density polyethylene | 100 | 106 | Nil | 80-125 | 0 | 45 |
| 5 | 96:4 Ethylene/Butene-1 Copolymer | 110 | 108 | Nil | 80-130 | 0 | 50 |
| 6 | High Density Polyethylene | 125 | 120 | 125-135 | 95-135 | 10 | 40 |
| 7 | 98:2 Butene-1/ Ethylene Copolymer | 115 | 107 | 95-140 | 75-135 | 45 | 60 |
| 8 | 74:26 propylene/ butene 1 Copolymer | 105 | 113 | 95-145 | 110-125 | 50 | 15 |

BAD ORIGINAL

0060037

Example 2

In this Example the intermediate layer of polymer was low density polyethylene (LDPE) in each of the two runs shown in Table 2.

The outer heat-sealable layer was varied as shown in the Table. The composite films were made generally as described in Example 1. The results in the columns headed "Layer Material" once again apply to the films under test but with the outer layer omitted.

Run 1 shows that an outer layer containing only 25% by weight polybutene-1 does not provide adequate sealing or hot tack despite the presence of an intermediate layer of low density polyethylene.

Run 2 shows that a satisfactory result is obtained when the outer layer contains 50% by weight of polybutene-1.

TABLE 2

| Run | Outer Layer (Polymer part, by weight) | Threshold Sealing Temperature °C | | Hot tack °C | | | |
|---|---|---|---|---|---|---|---|
| | | | | Range | | Span | |
| | | Layer Material | Film | Layer Material | Film | Layer Material | Film |
| 1 | 25:27 polybutene 1: polypropylene | 100 | poor sealing only above 105 | nil | nil | O | O |
| 2 | 50:50 polybutene 1: polypropylene | 100 | 108 | nil | 85-120 | O | 35 |

CLAIMS

1. An oriented heat-sealable polypropylene film comprising a base polypropylene film having on at least one surface an outer layer comprising a blend of polybutene-1 with polypropylene in which the polybutene-1 content is from 30 to 95% by weight of the blend characterised in that there is at least one layer between the said outer layer and the base polypropylene film and in that the layer lying immediately below the outer layer comprises a polymer having a preponderance by weight of ethylene and/or butene-1 units.

2. An oriented heat-sealable polypropylene film as claimed in claim 1 further characterised in that the polybutene-1 is present in the blend in an amount of from 50 to 85% by weight.

3. An oriented heat-sealable polypropylene film as claimed in claim 1 further characterised in that the polybutene-1 is present in the blend in an amount of from 70 to 80% by weight.

4. An oriented heat-sealable polypropylene film as claimed in any one of claims 1 to 3 further characterised in that the polymer of the layer immediately below the outer layer is low density polyethylene or an ethylene copolymer having a preponderance of ethylene units or is polybutene-1 or a copolymer of butene-1 having a preponderance of butene-1 units.

5. An oriented heat-sealable polypropylene film as claimed in claim 4 further characterised in that the said polymer is an ethylene copolymer being a copolymer of ethylene and butene-1.

6. A method of manufacture of an oriented heat-sealable polypropylene film comprising applying to at least one surface of a base polypropylene film at least two layers characterised in that the outer layer comprises a blend of polybutene-1 with polypropulene in which the polybutene-1 content is from 30 to 95% by weight of the blend and the layer lying immediately below the outer layer comprises a polymer having a preponderance by weight of ethylene and/or butene-1 units, the base polypropylene film being oriented by stretching in at least one direction either before or after application of the layers.

7. A method as claimed in claim 6 further characterised in that the base polypropylene film is oriented by stretching in two directions substantially at right angles to each other.

8. A method as claimed in claim 6 or claim 7 further characterised in that the layers are applied to the base polypropylene film by co-extrusion.

9. A heat sealable polypropylene film characterised by being produced by a method as claimed in any one of claims 6 to 8.

10. A packing comprising a heat sealed wrap of a film as claimed in any one of claims 1 to 5 and claim 9.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | FR-A-2 314 212 (IMPERIAL CHEMICAL INDUSTRIES) <br> * claims 1,7,8; page 9, lines 3-9 <br> * & GB - A - 1 497 577 | 1-10 | B 32 B 27/32 |
| Y | FR-A-2 083 503 (W.R. GRACE) <br> * claims 1-5 * & GB - A - 1 303 220 | 1-10 | |
| Y | FR-A-2 361 225 (TORAY) <br> * claims 1-5; page 10, lines 5-27 <br> * & GB - A - 1 582 186 | 1-10 | |
| Y | FR-A-2 438 601 (TOYO BOSEKI) <br> * claim 1 * | 1-10 | |

TECHNICAL FIELDS SEARCHED (Int. Cl. ³)

B 32 B
C 08 L
C 09 J
C 09 D

The present search report has been drawn up for all claims

| Place of search <br> THE HAGUE | Date of completion of the search <br> 25-06-1982 | Examiner <br> GOOVAERTS R.E. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82